# EUROPÄISCHE PATENTSCHRIFT

(11) **EP 1 231 116 B1**
(45) Veröffentlichungstag und Bekanntmachung des Hinweises auf die Patenterteilung: **08.09.2004**
(21) Anmeldenummer: 02001901.4
(22) Anmeldetag: 30.01.2002
(51) Int. Cl.: B60R 21/16

(54) **Gassack-Modul**
Airbag module
Module de sac gonflable

(30) Priorität: 07.02.2001 DE 20102115 U
(43) Veröffentlichungstag der Anmeldung: 14.08.2002
(73) Patentinhaber: TRW Automotive Safety Systems GmbH, 63743 Aschaffenburg (DE)
(72) Erfinder: Fellhauer, Joachim, 63741 Nilkheim (DE); Bohn, Stefan, 63773 Goldbach (DE)
(74) Vertreter: Kitzhofer, Thomas, Dipl.-Ing.

(56) Entgegenhaltungen:
- DE-A- 3 833 889
- US-A- 5 931 497

## Beschreibung

Die Erfindung betrifft ein Gassack-Modul, mit einem Gassack mit einer Gassackwand, die einen vorderen und einen rückseitigen Wandungsabschnitt aufweist, wobei vom vorderen Wandungsabschnitt im aufgeblasenen Zustand eine Einbuchtung in Richtung rückseitigem Wandungsabschnitt verläuft, die dadurch gebildet wird, daß ein Teil der Gassackwand an einer ungehinderten Bewegung nach außerhalb des Moduls beim Entfalten gehindert wird.

Derartige Gassäcke sind dafür gedacht, im Lenkrad oder der Armaturentafel eingebaut zu werden und bei einem Frontalaufprall den Insassen zu schützen. Der Gassack hat eine ringförmige aufzublasende Kammer, wobei die innere, die Einbuchtung begrenzende Wand durch die Einbuchtung gebildet ist. Die Einbuchtung erstreckt sich von der Vorderwand zentral nach hinten, und der tiefste Punkt der Einbuchtung wird durch ein Gewebeteil gebildet, das am Gassack-Modul bleibend befestigt ist und somit beim Entfalten nicht in Richtung Insassen bewegt wird. Im übrigen tritt der Gassack üblicherweise aufgrund der Ringform der Kammer schräg nach außen aus dem Modul aus, erst anschließend bewegt sich der vordere Wandungsabschnitt in Richtung zum Insassen.

Bei einem mittig sitzenden Insassen muß bei hoher Aufprallintensität ausgeschlossen sein, daß der Kopf des Insassen in die Einbuchtung eintauchen kann.

Aus der DE-A-3 833 889 ist ein Gassack mit einer ringförmigen Kammer bekannt. Die ringförmige Kammer umgibt eine zentrale Kammer, die nicht aufgeblasen wird. Diese Kammer ist vorderseitig stets dadurch geschlossen, daß eine Gewebelage durch eine umfangsmäßig geschlossene Naht an der Vorderseite der Gassackwand angenäht ist.

Der Erfindung liegt die Aufgabe zugrunde, ein Gassack-Modul zu schaffen, bei dem der Gassack selbst bei einem mittig sitzenden Insassen und hoher Aufprallintensität hervorragende Rückhaltewerte erreicht. Diese Aufgabe wird bei einem Gassack-Modul der eingangs genannten Art durch die Merkmale des Anspruchs 1 gelöst. Die Mündung der Einbuchtung ist der Übergang des vorderen Wandungsabschnitts zur Einbuchtung, also der Eingang derselben. Das Verschlußteil schiebt sich vor diesen Eingang, so daß am Ende des Aufblasvorgangs eine geschlossene Wand, ohne zugängliche Einbuchtung, zur Rückhaltung des Insassen zur Verfügung steht.

Gemäß einer Ausführungsform ist das Verschlußteil ein an der Gassackwand angenähtes Gewebeteil.

Dieses Verschlußteil kann bandförmig ausgebildet sein, wobei die beiden Enden des Bandes am rückseitigen Wandungsabschnitt befestigt sein können und das Band um den vorderen Wandungsabschnitt herumläuft. Das Band ist einfach zu befestigen, flexibel und stellt kein vorstehendes Teil dar. Die Verschiebung des Bandes erfolgt durch die sich relativ zueinander bewegenden vorderen und rückseitigen Wandungsabschnitte, ohne daß es einer separat zu betätigenden Einrichtung für die Verschiebung des Bandes bedarf.

Ähnliche Vorteile bietet auch ein kreuzförmig ausgebildetes Verschlußteil, das mit den freien Enden am rückseitigen Wandungsabschnitt befestigt ist. Der Kreuzungspunkt verschließt dann die Einbuchtung. Durch die kreuzförmige Gestalt ergibt sich eine höhere Stabilität des Verschlußteils gegenüber der Ausführungsform mit bandförmigem Verschlußteil.

Eine andere Ausgestaltung sieht vor, daß wenigstens zwei Verschlußteile vorgesehen sind. Diese Verschlußteile sind vorzugsweise relativ zueinander verschiebbar miteinander verbunden. Dies hat den Vorteil, daß sie um ein zentrisches Halteteil, das später noch näher erläutert wird, im gefalteten Zustand herumgelegt werden können. Im aufgeblasenen Zustand verschließen die zwei sich vorzugsweise überlappenden Verschlußteile die Einbuchtung sicher und fixieren sich dabei zueinander.

Ein Verschlußteil kann beispielsweise wenigstens eine Durchführöffnung für das andere Verschlußteil haben, welches sich durch die Durchführöffnung hindurch erstreckt, vorzugsweise in die Einbuchtung hinein.

Dabei kann sich ein bandartiger Fortsatz eines Verschlußteils durch die Durchfiihröffnung zu einem zentrischen Halteteil erstrecken, an dem auch der Teil der Gassackwand befestigt ist, welcher an einer ungehinderten Bewegung nach außerhalb des Moduls gehindert wird. Der bandartige, am Halteteil befestigte Fortsatz wirkt dabei wie ein Fangband.

Die z.B. bandförmigen oder kreuzförmigen Verschlußteile können helfen, auch die bislang üblichen Fangbänder zu ersetzen, die die Bewegung des vorderen Wandungsabschnitts begrenzen und dem Gassack eine bestimmte Gestalt geben sollen. Die Rückhaltung der Gassackwand kann nämlich durch das bandförmige oder kreuzförmige Verschlußteil erfolgen oder unterstützt werden.

Der Gassack wird vorzugsweise in einer ringförmigen Kammer im Gassack-Modul untergebracht, die innenseitig durch ein zentrisch angeordnetes Halteteil definiert ist. Dieses Halteteil dient meist dazu, ein Mittelstück einer Abdeckung des Moduls an einer Bewegung nach außen zu hindern. Das Halteteil erstreckt sich im gefalteten Zustand des Gassacks im Inneren der Einbuchtung, wobei sich die Einbuchtung beim Entfalten am Halteteil entlang bewegt und über eine ringförmige Austrittsöffnung das Modul verläßt. Das Verschlußteil ist im gefalteten Zustand um das Halteteil herumgelegt und kann sich beim Aufblasen anschließend so verschieben, daß es vor der Einbuchtung zu liegen kommt.

Eine andere Ausführungsform sieht vor, daß das Verschlußteil eine Öffnung hat, durch die sich im gefalteten Zustand das Halteteil hindurch erstreckt. Beim Entfalten bewegt sich die Öffnung, genauer gesagt der Rand der Öffnung, am Halteteil entlang nach außen. Beim Aufblasen kommt es dann zur Verschiebung des Verschlußteils relativ zur Gassackwand, so daß die Öffnung sich im vollständig aufgeblasenen Zustand außerhalb der Einbuchtung befindet. Die Ausführungsform mit Öffnung hat den Vorteil, daß das Verschlußteil als großflächiger Gewebeabschnitt ausgeführt sein kann, der den gesamten vorderen Wandungsabschnitt wie eine zweite Haut überdeckt.

Weitere Merkmale und Vorteile der Erfindung ergeben sich aus der nachfolgenden Beschreibung und aus den nachfolgenden Zeichnungen, auf die Bezug genommen wird. In Zeichnungen zeigen:
- - Figur 1: eine Längsschnittansicht durch ein erfindungsgemäßes Gassack-Modul bei vollständig aufgeblasenem Gassack,
- - Figur 2: eine Draufsicht auf den vorderen Wandungsabschnitt des Gassacks in Figur 1 bei vollständig aufgeblasenem Zustand gemäß einer ersten Ausführungsform,
- - Figur 3: eine Draufsicht auf den vorderen Wandungsabschnitt bei vollständig aufgeblasenem Gassack gemäß einer zweiten Ausführungsform,
- - Figur 4: eine Draufsicht auf das Gassack-Modul bei gefaltetem Gassack, ohne Abdeckung,
- - Figur 5: eine Draufsicht auf den vorderen Wandungsabschnitt des aufgeblasenen Gassacks gemäß einer dritten Ausführungsform,
- - Figur 6: eine Längsschnittansicht durch eine vierte Ausführungsform eines erfindungsgemäßen Gassackmoduls bei vollständig aufgeblasenem Gassack,
- - Figur 7: eine Draufsicht auf das Detail X des in Figur 6 gezeigten Gassacks, und
- - Figur 8: eine Draufsicht auf den vorderen Wandungsabschnitt bei vollständig aufgeblasenem Gassack gemäß einer fünften Ausführungsform.

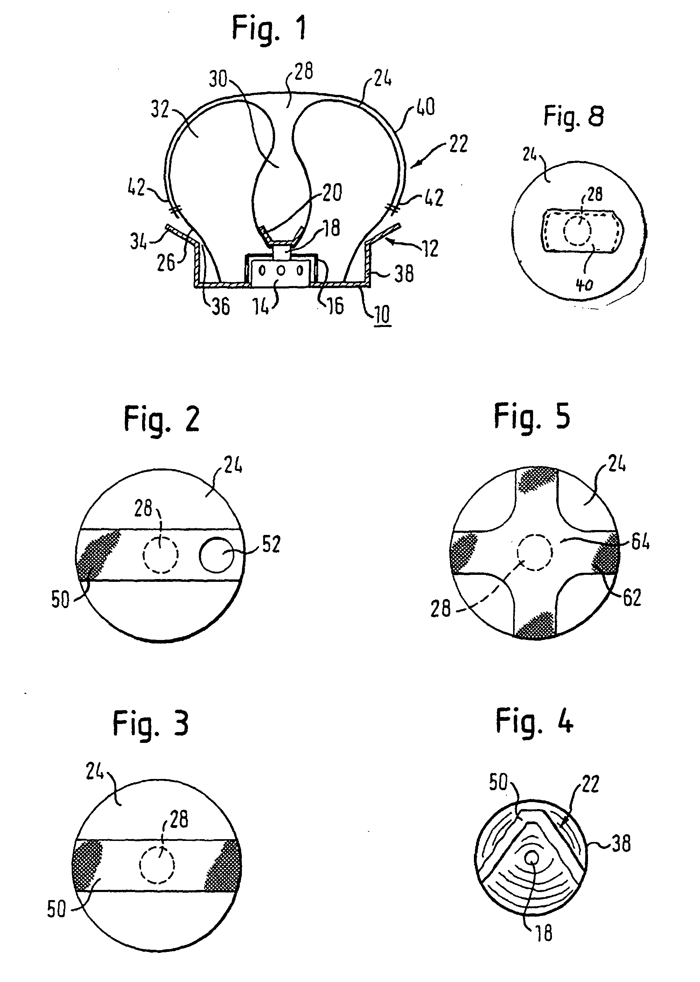

In Figur 1 ist ein Gassack-Modul dargestellt, das im Lenkrad eines Fahrzeugs untergebracht, ist. Das Gassack-Modul hat ein Aufnahmegehäuse 10, das vorderseitig mit einer Abdeckung 12 geschlossen ist. Im Modul ist ein Gasgenerator 14 untergebracht, der von einem käfigförmigen Diffusor 16 umgeben ist. Von der Stirnseite des Diffusors 16 steht ein Halteteil in Form eines Rohres 18 ab, welches ein Mittelstück 20 der einstückigen Abdeckung 12 an einem Nachaußenschwenken beim Öffnen der Abdeckung 12 hindert, so daß das Mittelstück 20 stehen bleibt. Ein Gassack 22 im Modul hat eine Gassackwand, die aus mehreren Abschnitten besteht, nämlich einem vorderen Wandungsabschnitt 24, der dem Insassen im aufgeblasenen Zustand zugewandt ist, und einem rückseitigen Wandungsabschnitt 26. Der vordere Wandungsabschnitt 24 hat eine zentrische Öffnung 28, die eine Mündung einer Einbuchtung 30 bildet. Die Einbuchtung 30 entsteht dadurch, daß durch das Halteteil 18 und das Mittelstück 20 ein Teil der Gassackwand, nämlich das eigentliche Zentrum des vorderen Wandungsabschnitts 24 an einer Bewegung in Richtung zum Insassen gehindert wird. Durch die Einbuchtung 30, die nicht mit Gas befüllt wird, entsteht eine ringförmige, mit Gas zu befüllende Kammer 32 des Gassacks 22.

Mit 34 sind die Abschnitte der Abdeckung 12 bezeichnet, die sich vom Mittelstück 20 beim Entfalten des Gassacks lösen und nach außen schwenken zur Freigabe einer ringförmigen Austrittsöffnung 36.

Im gefalteten Zustand ist der Gassack im Modul in einem Ringraum untergebracht, der radial durch den Käfig 16, das Halteteil 18 und außenseitig durch die Umfangswand 38 des Modulgehäuses 10 begrenzt ist.

Damit der Insasse, der auf den Wandungsabschnitt 24 prallt, nicht in die Einbuchtung 30 eindringen kann, hat der Gassack ein Verschlußteil 40 in Form eines Gewebestreifens oder eines den gesamten Wandungsabschnitt 24 abdeckenden Gewebeteils, der/das außenseitig an der Gassackwand, vorzugsweise am rückseitigen Wandungsabschnitt 26, mit seinen Enden 42 vernäht ist.

Nur zur Verdeutlichung ist in Figur 1 das Verschlußteil 40 beabstandet von der Gassackwand dargestellt. Tatsächlich liegt das Verschlußteil 40 vollflächig an der Gassackwand an.

Das Verschlußteil 40 muß an solchen Stellen an der Gassackwand befestigt sein, daß es sich im aufgeblasenen Zustand, wie dargestellt, vor die Mündung der Einbuchtung 30 schiebt und diese verschließt. Es ist nicht zwingend erforderlich, daß das Verschlußteil 40 am rückseitigen Wandungsabschnitt 26 befestigt ist, auch eine Befestigung am Gehäuse 10 des Moduls oder am vorderen Wandungsabschnitt 24 ist möglich. Je länger das Verschlußteil jedoch ist, umso größer ist die maximale Verschiebung zwischen Verschlußteil 40 und Mündung der Einbuchtung 30.

Wenn das Verschlußteil 40 in Form eines Gewebebandes jedoch am rückseitigen Wandungsabschnitt 26 oder gar am Gehäuse 10 des Moduls befestigt ist, kann es eine zusätzliche Funktion erfüllen, nämlich die eines herkömmlichen Fangbandes, das bislang im Inneren von Gassäcken angeordnet ist. Wie Figur 1 zu entnehmen ist, weist der Gassack des erfindungsgemäßen Moduls vorzugsweise kein im Inneren der Kammer 32 angeordnetes Fangband auf

In Figur 2 ist eine Ausführungsform des Verschlußteils 40 dargestellt, wobei dieses als Gewebeband 50 ausgeführt ist. Das Gewebeband 50 ist, wie in Figur 1 dargestellt, am rückseitigen Wandungsabschnitt 26 befestigt und hat eine Öffnung 52, die im entfalteten Zustand außerhalb der Öffnung 28, d.h. außerhalb der Mündung der Einbuchtung 30 liegt. Im gefalteten Zustand jedoch ist die Öffnung 52 konzentrisch zur Öffnung 28 ausgebildet, so daß sich das Halteteil 18 durch die Öffnung 52 hindurch erstrecken kann.

Beim Entfalten jedoch bewegt sich die Öffnung 52 am Halteteil 18 und dem Mittelstück 20 entlang, um diese zu verlassen. Anschließend jedoch verschieben sich die Gassackwand und das Gewebeband 50 zueinander, so daß die Öffnung 52 nach außen wandert.

Bei der Ausführungsform nach Figur 3 ist das Gewebeband 50 ohne die Öffnung 52 ausgeführt. Im gefalteten Zustand ist es in dem Ringraum zwischen Halteteil 18 und Umfangswand 38 so untergebracht, daß es um das Halteteil 18 herumgelegt ist. Der Gassack 22 kann bei der Montage seitlich gerafft werden, so daß das Gewebeband 50 zur Seite geschoben werden kann und die Einbuchtung 30 zum Durchtritt des Halteteils 18 freigegeben ist (siehe Figur 4). Beim Entfalten verschiebt sich jedoch das Gewebeband 50 und schließt die Einbuchtung 30, wie in Figur 1 dargestellt.

Bei der Ausführungsform nach Figur 5 ist das Verschlußteil ein kreuzförmiges Gewebestück 62, das an seinem Kreuzungspunkt 64 die Einbuchtung verschließt. Bei dieser Ausführungsform sind die vier Enden des Kreuzes, wie in Figur 1, am rückseitigen Wandungsabschnitt 26 angebracht. Durch diese Ausführungsform erhält das Verschlußstück eine große Stabilität und kann ebenfalls als Fangband dienen.

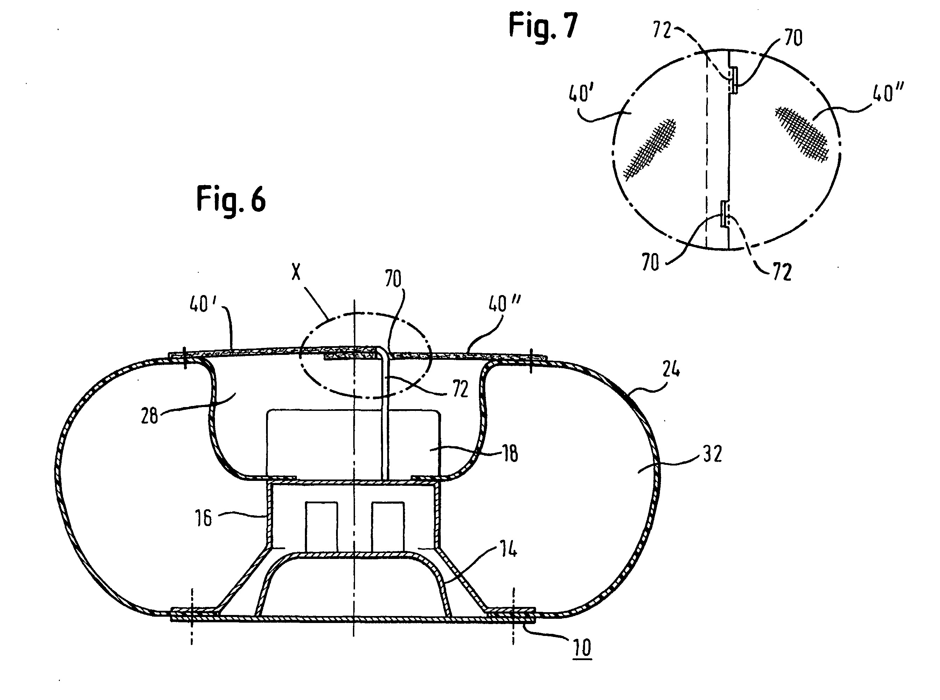

Die Ausführungsform nach den Figuren 6 und 7 entspricht im wesentlichen den zuvor erläuterten, weshalb nur noch auf die Unterschiede eingegangen wird und die bereits eingeführten Bezugszeichen für funktionsgleiche Teile übernommen werden.

Anstatt eines Verschlußteils sind bei der Ausführungsform nach Figur 6 zwei Verschlußteile 40', 40" in Form von Gewebeabschnitten vorgesehen. Beide Verschlußteile 40', 40" sind an einem äußeren Rand am vorderen Wandungsabschnitt 24 befestigt (durch Nähen, Kleben, Schweißen oder dergleichen). Das Verschlußteil 40" erstreckt sich bis zur Mitte der Einbuchtung 28 und hat nahe der Mitte der Einbuchtung 28 mehrere Durchführöffnungen 70 in Form von langgestreckten Schlitzen. Das Gewebe ist im Bereich um die Durchführöffnungen 70 herum verstärkt, um ein Ausreißen zu verhindern.

Das Verschlußteil 40' erstreckt sich über die Mitte der Einbuchtung 28 hinaus, teilweise über das Verschlußteil 40", um es zu überlappen. An seinem, in bezug auf Figur 6, rechten Ende besitzt das Verschlußteil 40' zwei bandförmige, lange Fortsätze 72, mit denen es durch die zugeordneten Durchführöffnungen 70 hindurch in die Einbuchtung 28 ragt. Die Fortsätze 72 sind schließlich am Halteteil 18 befestigt. Die Fortsätze 72 wirken wie Fangbänder, so daß in der Kammer 32 kein Fangband mehr notwendig ist. Durch die mehreren Verschlußteile ergibt sich ein symmetrisches Entfaltungsverhalten des Gassacks und ein sicheres Verschließen, denn die Verschlußteile 40', 40" überlappen sich teilweise, verspannen sich und fixieren sich zueinander. Die Fortsätze 72 können als Gewebeabschnitt des Verschlußteils 40' oder als daran befestigte Bänder ausgeführt sein. Die Durchführöffnungen 70 können als schlaufenartige, separate Teile ausgeführt sein, die am Verschlußteil 40" befestigt werden.

Darüber hinaus ist es möglich, mehr als zwei Verschlußteile 40', 40" zu verwenden. Auch kann jedes der Verschlußteile einerseits Durchfuhröffnungen als auch Fortsätze haben, die durch Durchführöffnungen eines angrenzenden Verschlußteils ragen, d.h. mit Bezug auf Figur 7, die obere Durchführöffnung 70 ist am Verschlußteil 40" und die untere am Verschlußteil 40' vorgesehen.

Das Verschlußteil 40 gemäß Figur 8 ist am vorderen Wandungsabschnitt 24 durch eine U-förmige, die Einbuchtung 28 umgebende Naht befestigt. Die offene Seite des "U" erlaubt die Verschiebung des Verschlußteils 40 im gefalteten Zustand um das Haltelteil 18 herum.

## Patentansprüche

1. Gassack-Modul, mit
einem Gassack (22) mit einer Gassackwand, die einen vorderen und einen rückseitigen Wandungsabschnitt (24, 26) aufweist,
wobei vom vorderen Wandungsabschnitt (24) im aufgeblasenen Zustand eine Einbuchtung (30) in Richtung zum rückseitigen Wandungsabschnitt (26) verläuft, die dadurch gebildet ist, daß ein Teil der Gassackwand an einer ungehinderten Bewegung nach außerhalb des Moduls beim Entfalten des Gassacks gehindert wird,
**dadurch gekennzeichnet, daß**
an der Gassackwand oder am Gehäuse (10) des Moduls ein Verschlußteil (40) so befestigt ist, daß es sich beim Aufblasen des Gassacks (22) vor die anfänglich offene Mündung der Einbuchtung (30) schiebt und die Einbuchtung (30) im aufgeblasenen Zustand des Gassacks (22) schließt.

2. Gassack-Modul nach Anspruch 1, **dadurch gekennzeichnet, daß** das Verschlußteil (40) ein an der Gassackwand angenähtes Gewebeteil (50; 62) ist.

3. Gassack-Modul nach Anspruch 1 oder 2, **dadurch gekennzeichnet, daß** das Verschlußteil (40) bandförmig ausgebildet ist und mit seinen Enden an der Gassackwand befestigt ist und über den vorderen Wandungsabschnitt (24) verläuft.

4. Gassack-Modul nach Anspruch 1 oder 2, **dadurch gekennzeichnet, daß** das Verschlußteil (40) kreuzförmig ausgebildet und mit den freien Enden an der Gassackwand befestigt ist und daß der Kreuzungspunkt (64) die Einbuchtung (30) verschließt.

5. Gassack-Modul nach einem der vorhergehenden Ansprüche, **dadurch gekennzeichnet, daß** wenigstens zwei Verschlußteile (40', 40") vorgesehen sind.

6. Gassack-Modul nach Anspruch 5, **dadurch gekennzeichnet, daß** die zwei Verschlußteile (40', 40") relativ zueinander verschiebbar miteinander verbunden sind.

7. Gassack-Modul nach Anspruch 6, **dadurch gekennzeichnet, daß** wenigstens ein Verschlußteil (40', 40") wenigstens eine Durchführöffnung (70) für das andere Verschlußteil (40", 40') hat, das sich durch die Durchführöffnung (70) erstreckt.

8. Gassack-Modul nach Anspruch 7, **dadurch gekennzeichnet, daß** sich ein Verschlußteil (40', 40") durch die Durchführöffnung (70) und in die Einbuchtung (28) hinein erstreckt.

9. Gassack-Modul nach Anspruch 8, **dadurch gekennzeichnet, daß** sich ein bandförmiger Fortsatz (72) eines Verschlußteils (40', 40") durch die Durchführöffnung (70) zu einem zentrischen Halteteil (18) erstreckt, an dem der Teil der Gassackwand befestigt ist, der an einer ungehinderten Bewegung nach außerhalb des Moduls gehindert wird, wobei auch der bandförmige Fortsatz (72) am Halteteil (18) befestigt ist.

10. Gassack-Modul nach einem der Ansprüche 3 bis 9, **dadurch gekennzeichnet, daß** der Gassack (22) in seinem Inneren kein Fangband aufweist und der vordere Wandungsabschnitt (24) im aufgeblasenen Zustand des Gassacks am Verschlußteil (40) anliegt.

11. Gassack-Modul nach einem der vorhergehenden Ansprüche, **dadurch gekennzeichnet, daß** im Gassack-Modul ein zentrisch angeordnetes Halteteil (18) vorgesehen ist, das eine ringförmige Kammer zur Unterbringung des gefalteten Gassacks (22) innenseitig begrenzt und das sich im gefalteten Zustand des Gassacks (22) im Inneren der Einbuchtung (30) erstreckt, wobei das Verschlußteil (40) so verschoben werden kann, daß es im gefalteten Zustand des Gassacks (22) das Halteteil (18) wenigstens teilweise seitlich umgibt.

12. Gassack-Modul nach einem der Ansprüche 1 bis 10, **dadurch gekennzeichnet, daß** im Gassack-Modul ein zentrisch angeordnetes Halteteil (18) vorgesehen ist, das eine ringförmige Kammer zur Unterbringung des gefalteten Gassacks (22) innenseitig begrenzt und das sich im gefalteten Zustand des Gassacks (22) im Inneren der Einbuchtung (30) erstreckt, wobei das Verschlußteil eine Öffnung (52) hat, durch die sich im gefalteten Zustand des Gassacks (22) das Halteteil (18) erstreckt und die beim Entfalten am Halteteil (18) entlang nach außen verschoben wird, und wobei sich die Öffnung (52) des Verschlußteils (40) im aufgeblasenen Zustand des Gassacks außerhalb der Einbuchtung (30) befindet.

13. Gassack-Modul nach Anspruch 11 oder 12, **dadurch gekennzeichnet, daß** das Gassack-Modul eine Abdeckung (12) für eine ringförmige, vorgegebene Austrittsöffnung (36) hat, wobei die Abdeckung (12) ein Mittelstück (20) aufweist, das mit dem Halteteil (18) verbunden und von der Austrittsöffnung (36) umgeben ist und das beim Öffnen der Abdeckung (12) ortsfest bleibt.

## Claims

1. A gas bag module, comprising
a gas bag (22) with a gas bag wall, which has a front and a rear wall section (24, 26),
a depression (30) running in the inflated state from the front wall section (24) towards the rear wall section (26), the depression (30) being formed in that a part of the gas bag wall is prevented from an unimpeded movement towards the outside of the module during unfolding of the gas bag,
**characterized in that**
a closure piece (40) is fastened to the gas bag wall or to the housing (10) of the module such that during inflation of the gas bag (22) it moves in front of the initially open mouth of the depression (30) and closes the depression (30) in the inflated state of the gas bag (22).

2. The gas bag module according to Claim 1, **characterized in that** the closure piece (40) is a fabric piece (50; 62) sewn to the gas bag wall.

3. The gas bag module according to Claim 1 or 2, **characterized in that** the closure piece (40) is constructed in a band shape and is fastened by its ends to the gas bag wall and runs across the front wall section (24).

4. The gas bag module according to Claim 1 or 2, **characterized in that** the closure piece (40) is constructed in a cross shape and is fastened by the free ends to the gas bag wall and that the crossing point (64) closes the depression (30).

5. The gas bag module according to any of the preceding claims, **characterized in that** at least two closure pieces (40', 40") are provided.

6. The gas bag module according to Claim 5, **characterized in that** the two closure pieces (40', 40") are connected with each other so as to be movable in relation to one another.

7. The gas bag module according to Claim 6, **characterized in that** at least one closure piece (40', 40") has at least one leadthrough opening (70) for the other closure piece (40", 40') extending through the leadthrough opening (70).

8. The gas bag module according to Claim 7, **characterized in that** one closure piece (40', 40") extends through the leadthrough opening (70) and into the depression (28).

9. The gas bag module according to Claim 8, **characterized in that** a band-shaped extension (72) of one closure piece (40', 40") extends through the leadthrough opening (70) and to a central holding piece (18) to which that part of the gas bag wall is fastened which is prevented from an unimpeded movement towards the outside of the module, the band-shaped extension (72) being likewise fastened to the holding piece (18).

10. The gas bag module according to any of Claims 3 to 9, **characterized in that** the gas bag (22) does not have a limiting strap in its interior, and the front wall section (24) lies against the closure piece (40) in the inflated state of the gas bag.

11. The gas bag module according to any of the preceding claims, **characterized in that** in the gas bag module a centrally arranged holding piece (18) is provided, which delimits an annular chamber on the inner side to accommodate the folded gas bag (22) and which in the folded state of the gas bag (22) extends inside the depression (30), the closure piece (40) being able to be displaced such that in the folded state of the gas bag (22) it at least partially laterally surrounds the holding piece (18).

12. The gas bag module according to any of Claims 1 to 10, **characterized in that** in the gas bag module a centrally arranged holding piece (18) is provided, which delimits an annular chamber on the inner side to accommodate the folded gas bag (22) and which in the folded state of the gas bag (22) extends inside the depression (30), the closure piece having an opening (52) through which the holding piece (18) extends in the folded state of the gas bag (22) and which during unfolding is displaced outwards along the holding piece (18), and the opening (52) of the closure piece (40) in the inflated state of the gas bag being situated outside the depression (30).

13. The gas bag module according to Claim 11 or 12, **characterized in that** the gas bag module has a covering (12) for an annular, predefined exit opening (36), the covering (12) having a central piece (20) which is connected with the holding piece (18) and is surrounded by the exit opening (36) and which remains stationary on opening of the covering (12).

## Revendications

1. Module de coussin à gaz, comportant
un coussin à gaz (22) avec une paroi de coussin à gaz qui présente un tronçon de paroi antérieur (24) et un tronçon de paroi postérieur (26),
un creux (30) s'étendant, à l'état gonflé, depuis le tronçon de paroi antérieur (24) en direction du tronçon de paroi postérieur (26), lequel creux étant formé par le fait qu'une partie de la paroi de coussin à gaz est empêchée de faire un mouvement sans entraves vers l'extérieure du module lors du déploiement du coussin à gaz,
**caractérisé en ce que**
une pièce de fermeture (40) est fixée sur la paroi de coussin à gaz ou sur le boîtier (10) du module de telle sorte que lors du gonflage du coussin à gaz (22), elle se glisse devant l'embouchure initialement ouverte du creux (30) et ferme le creux (30) à l'état de gonflage du coussin à gaz (22).

2. Module de coussin à gaz selon la revendication 1, **caractérisé en ce que** la pièce de fermeture (40) est une pièce de tissu (50 ; 62).

3. Module de coussin à gaz selon la revendication 1 ou 2, **caractérisé en ce que** la pièce de fermeture (40) est réalisée sous forme de ruban et est fixée par ses extrémités à la paroi du coussin à gaz, et s'étend à travers le tronçon de paroi antérieur (24).

4. Module de coussin à gaz selon la revendication 1 ou 2, **caractérisé en ce que** la pièce de fermeture (40) est réalisée sous forme de croix et est fixée par ses extrémités à la paroi de coussin à gaz, et **en ce que** le point de croisement (64) ferme le creux (30).

5. Module de coussin à gaz selon l'une des revendications précédentes, **caractérisé en ce qu'**il est prévu au moins deux pièces de fermeture (40', 40").

6. Module de coussin à gaz selon la revendication 5, **caractérisé en ce que** les deux pièces de fermeture (40', 40") sont reliées l'une à l'autre de manière à pouvoir être déplacées l'une par rapport à l'autre.

7. Module de coussin à gaz selon la revendication 6, **caractérisé en ce qu'**au moins une pièce de fermeture (40', 40") a au moins une ouverture de passage (70) pour l'autre pièce de fermeture (40", 40') qui s'étend à travers l'ouverture de passage (70).

8. Module de coussin à gaz selon la revendication 7, **caractérisé en ce qu'**une pièce de fermeture (40', 40") s'étend à travers l'ouverture de passage et jusque dans le creux (28).

9. Module de coussin à gaz selon la revendication 8, **caractérisé en ce qu'**un prolongement (72) en forme de ruban, d'une pièce de fermeture (40', 40"), s'étend à travers l'ouverture de passage (70) vers une pièce de retenue (18) centrale sur laquelle est fixée la partie de la paroi de coussin à gaz qui est empêchée de faire un mouvement sans entrave vers l'extérieure du module, le prolongement (72) en forme de ruban étant aussi fixé sur la pièce de retenue (18).

10. Module de coussin à gaz selon l'une des revendications 3 à 9, **caractérisé en ce que** le coussin à gaz (22) ne présente dans son intérieur aucune bande de garde et le tronçon de paroi antérieur (24) est en appui sur la pièce de fermeture (40) à l'état de gonflage du coussin à gaz.

11. Module de coussin à gaz selon l'une des revendications précédentes, **caractérisé en ce que** dans le coussin à gaz est prévue une pièce de retenue (18) agencée au centre, qui délimite sur la face intérieure une chambre annulaire destinée à loger le coussin à gaz (22) plié et qui s'étend à l'intérieur du creux (30) à l'état plié du coussin à gaz (22), la pièce de fermeture (40) pouvant être déplacée de telle sorte qu'à l'état plié du coussin à gaz (22), elle entoure au moins partiellement latéralement la pièce de retenue (18).

12. Module de coussin à gaz selon l'une des revendications 1 à 10, **caractérisé en ce que** dans le coussin à gaz est prévue une pièce de retenue (18) agencée au centre, qui délimite sur la face intérieure une chambre annulaire destinée à loger le coussin à gaz (22) plié et qui s'étend à l'intérieur du creux (30) à l'état plié du coussin à gaz (22), la pièce de fermeture ayant une ouverture (52) à travers laquelle s'étend la pièce de retenue (18) à l'état plié du coussin à gaz (22) et qui, lors du déploiement, est déplacée le long de la pièce de retenue (18) vers l'extérieur, et l'ouverture (52) de la pièce de fermeture se trouvant en dehors du creux (30), à l'état de gonflage du coussin à gaz.

13. Module de coussin à gaz selon la revendication 11 ou 12, **caractérisé en ce que** le module de coussin à gaz a un couvercle (12) pour une ouverture de sortie (36) annulaire prédéterminée, le couvercle (12) présentant une pièce médiane (20) qui est reliée à la pièce de retenue (18) et entourée par l'ouverture de sortie (36) et qui reste stationnaire lorsqu'on ouvre le couvercle (12).
